(19) **Europäisches Patentamt**

**European Patent Office**

**Office européen des brevets**

(11) **EP 0 674 116 B1**

(12) **EUROPÄISCHE PATENTSCHRIFT**

(45) Veröffentlichungstag und Bekanntmachung des Hinweises auf die Patenterteilung:
**29.07.1998 Patentblatt 1998/31**

(51) Int Cl.6: **F16D 65/14**

(21) Anmeldenummer: **95102231.8**

(22) Anmeldetag: **17.02.1995**

(54) **Bremszylinder für Schienenfahrzeuge mit einer Handbremsvorrichtung**

Brake cylinder for railway vehicles with hand brake device

Cylindre de frein pour véhicules ferroviaires avec frein à main

(84) Benannte Vertragsstaaten:
**DE FR GB IT SE**

(30) Priorität: **22.03.1994 DE 4409867**

(43) Veröffentlichungstag der Anmeldung:
**27.09.1995 Patentblatt 1995/39**

(73) Patentinhaber: **KNORR-BREMSE Systeme für Schienenfahrzeuge GmbH 80809 München (DE)**

(72) Erfinder:
• **Staltmeir, Josef**
 **D-80807 München (DE)**
• **Fuderer, Erich**
 **D-82110 Germering (DE)**

(56) Entgegenhaltungen:
**EP-A- 0 081 467      EP-A- 0 553 450**
**FR-A- 2 331 717**

**Beschreibung**

Die Erfindung betrifft eine Bremseinheit für Schienenfahrzeuge.

Die DE 90 15 419 U1 zeigt eine Betätigungsvorrichtung für eine Bremse, die einerseits eine Betätigung durch Druckmittel und andererseits eine mechanische Betätigung erlaubt. An einer zu einem Kolbenstangenrohr beabstandeten Welle, die das Kolbenstangenrohr rechtwinklig kreuzt, ist ein Nocken angeordnet, der auf ein am Kolbenstangenrohr angeordnetes Widerlager einwirkt.

Die AT 366 226 B zeigt eine Betätigungseinrichtung für eine Bremse, bei der zu beiden Seiten des Kolbenstangenrohres je eine Rolle angeordnet ist, deren Achse die Achse des Kolbenstangenrohres rechtwinklig schneidet. Auf beide Rollen wird durch beidseitig vom Kolbenstangenrohr angeordnete Keilstücke eine Betätigungskraft ausgeübt.

Eine symmetrische Bremsbetätigung mittels zweier Nocken, die auf als Widerlager wirkende Rollen an einer Bremsstange einwirken, sind aus der EP-A-0 081 467 bekannt. In vergleichbarer Weise zeigt die DE-PS 27 30 959 eine mit einem Keilgetriebe ausgestattete Bremseinheit, bei welcher allerdings der Kolben rechtwinklig zu einem dem Kolbenstangenrohr vergleichbaren, den Gestängesteller und den Betätigungsstößel beinhaltenden Rohrkörper angeordnet ist. Hierbei greift der Nocken an einem seitlich aus dem Rohrkörper auskragenden Vorsprung an, woraus sich eine außermittige und zusätzlich zu der Längsrichtung des Rohrkörpers geneigte Krafteinleitung in den Rohrkörper ergibt. Dies führt zu unerwünschten Biege- und Seitenkraftbelastungen des Rohrkörpers, wodurch dessen Führungen stark beansprucht sind und der Gestängesteller in seiner Gängigkeit beeinträchtigt werden kann. Zusätzlich ergeben sich hohe Reibkräfte, welche den Wirkungsgrad stark schmälern. Auch benötigen die bekannten Anordnungen viel Bauraum, da der Nocken vollständig radial außerhalb des Rohrkörpers angeordnet werden muß.

Aus der ebenfalls eine Bremseinheit mit einem Keilgetriebe zeigenden WO-80/0060 ist es bekannt, zur Schnellanlegung in der Keilfläche des Keilgetriebes eine Ausnehmung vorzusehen, welche entsprechend einer im Lösezustand in sie eingreifenden Rolle gerundet ausgebildet ist.

Die Aufgabe der Erfindung besteht darin, zusätzlich zu einer reibungsarmen Betätigung die Konstruktion der Bremseinheit dahingehend zu verbessern, daß bei einfacher Montagemöglichkeit Dichtstellen eingespart werden und somit die Gefahr von Undichtigkeiten vermieden wird.

Diese Aufgabe wird durch den Gegenstand des Anspruches 1 gelöst. Die Unteransprüche zeigen weitere vorteilhafte Fortbildungsmöglichkeiten der Erfindung auf.

Neben der vorteilhaften Dichtfunktion ist die erfindungsgemäße Bremseinheit auch so ausgebildet, daß das Kolbenstangenrohr während Handbremsungen zumindest nahezu keinerlei Biegebeanspruchungen oder Seitenkräfte erfährt, wobei desweiteren die Reibkräfte extrem niedrig gehalten werden, wodurch neben einer Schonung und zuverlässigen Funktion des Gestängestellers ein hoher Wirkungsgrad erreichbar ist.

In der Zeichnung ist ein Ausführungsbeispiel für eine nach der Erfindung ausgebildete Bremseinheit schematisch dargestellt, und zwar zeigt

Fig. 1    einen Axialschnitt durch die Bremseinheit,

Fig. 2    einen zur Schnittebene der Fig. 1 um 90° gedrehten Axialschnitt durch ein Einzelteil, nämlich das Kolbenstangenrohr mit Kolben,

Fig. 3    einen Teilschnitt entsprechend der Fig. 1 durch das rückwärtige Ende der Bremseinheit bei entferntem Kolbenstangenrohr, und

Fig. 4    einen die Achse der Welle beinhaltenden, zur Fig. 1 rechtwinklig verlaufenden Schnitt in verkleinertem Maßstab.

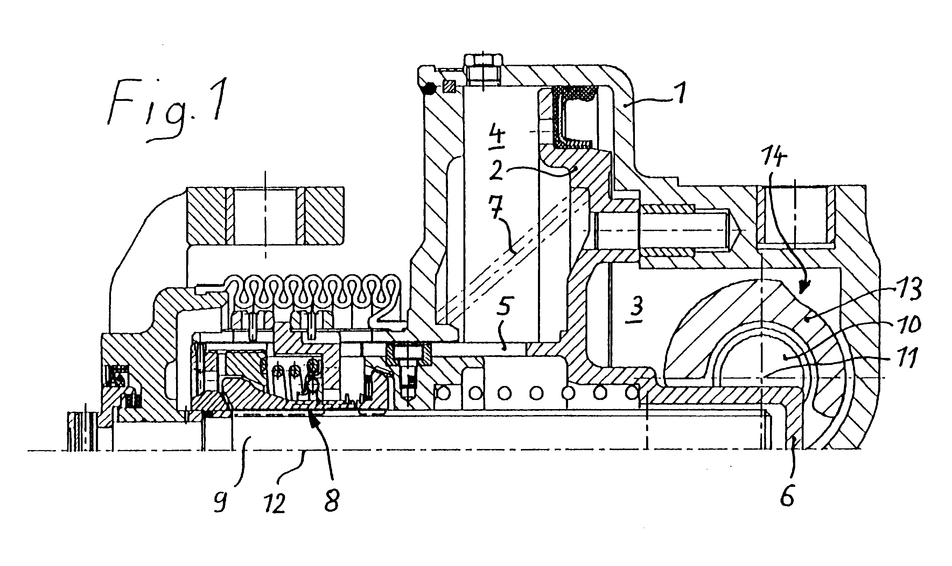

Der Bremszylinder der Bremseinheit weist gemäß Fig.1 in einem Zylindergehäuse 1 einen Kolben 2 auf, der einen über einen nicht dargestellten Anschluß mit einem Druckmittel, dem Bremsdruck, beaufschlagbaren Raum 3 von einer Außenluftkammer 4 abtrennt. Zentrisch ist der Kolben 2 von einem beiderseits axial auskragenden Kolbenstangenrohr 5 durchsetzt, dessen rückwärtiges, rechtes Ende 6 innerhalb des Raumes 3 verschlossen ist. In der Außenluftkammer 4 befindet sich eine den Kolben 2 belastende Rückstellfeder 7. Innerhalb des Kolbenstangenrohres 5 befindet sich ein Gestängesteller 8, der das Kolbenstangenrohr 5 mit einem zentrisch angeordneten Betätigungsstößel 9 zur Abgabe der Bremszuspannkraft koppelt. Für den Gestängesteller 8 sind viele unterschiedliche Bauarten bekannt, in Fig.1 ist ein Gestängesteller gemäß der im Handel befindlichen U-Zylinderbaureihe der Anmelderin dargestellt, dessen Aufbau und Funktionsweise bekannt sind und daher keiner weiteren Erläuterung bedürfen und hier auch unwesentlich sind. Insoweit entspricht der Bremszylinder bekannten Ausführungen.

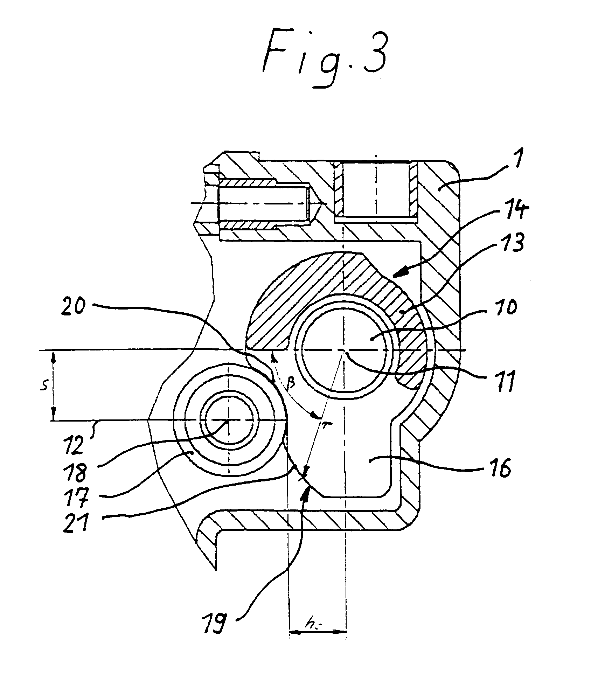

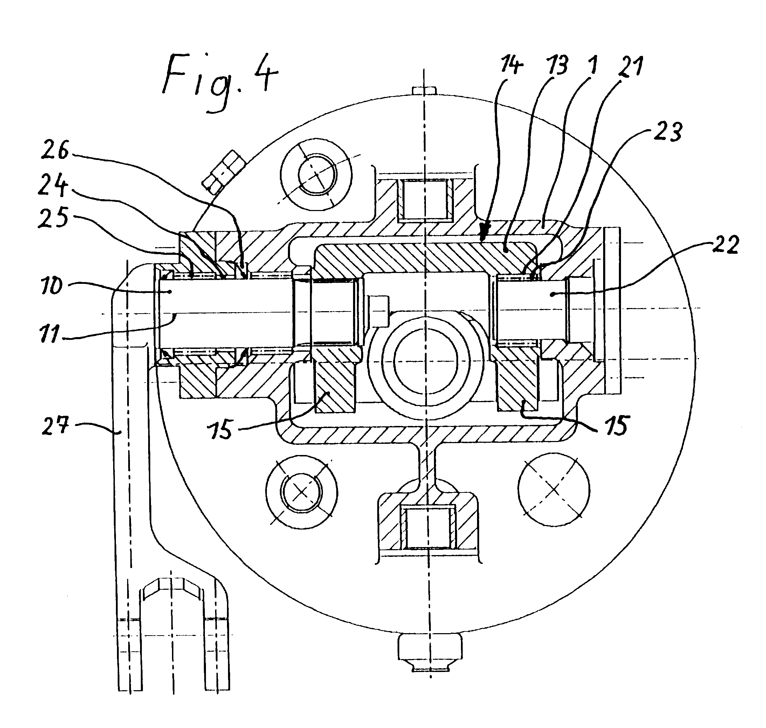

Nahe des Endes 6 des Kolbenstangenrohres 5 ist im Zylindeergehäuse 1 eine Welle 10 drehbar gelagert, deren Achse 11 in einem in Fig.3 eingezeichneten Abstand s zur Achse 12 des Kolbenstangenrohres 5 und damit des Bremszylinders, diese Achse 12 und den nach rückwärts auskragenden Abschnitt des Kolbenstangenrohres 5 rechtwinklig überkreuzend, verläuft. In ihrem das Kolbenstangenrohr 5 kreuzenden Bereich ist die Welle 10 bügelartig gekröpft ausgebildet, wobei der Steg 13 der Kröpfung 14 um die Achse 11 etwa halbzylindrisch als zum Kolbenstangenrohr 5 offene Halbschale ausgebildet ist, welche bereits im Lösezustand des Bremszylinders, wie aus Fig.1 ersichtlich, das Ende 6 etwas hintergreift. Die beiden Seitenschenkel 15 der Kröpfung 14 sind, wie später zu den Fig.3 und 4 genauer erläutert wird, zu Nocken 16 ausgebildet, welche drehfest mit der Welle 10 verbunden sind.

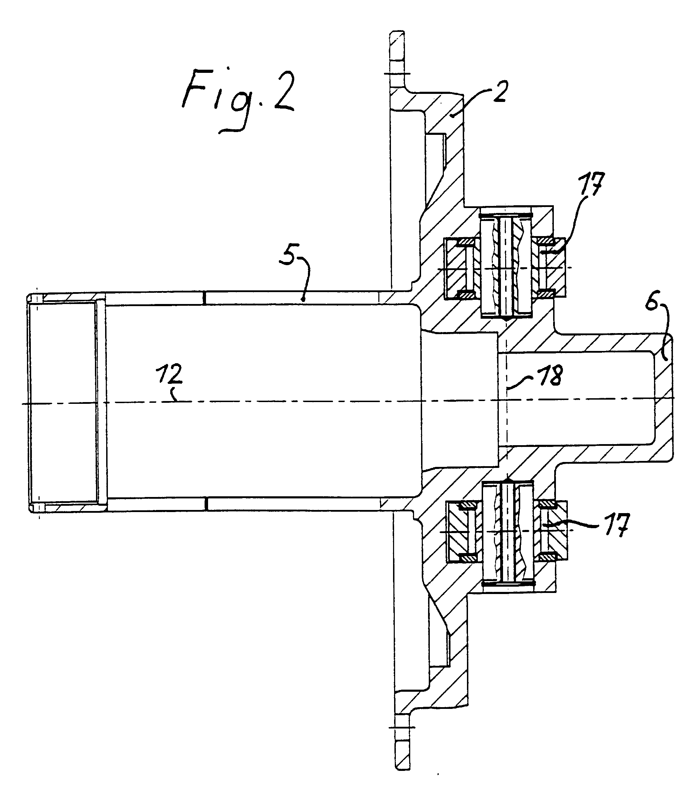

Gemäß Fig.2 sind beiderseits des Kolbenstangenrohres 5 zwei Rollen 17 um eine gemeinsame Drehachse 18 drehbar gelagert, welche die Achse 12 des Kolbenstangenrohres 5 rechtwinklig schneidet; die Rollen 17 können die Außenringe zweier Wälzlager sein. Die Rollen 17 befinden sich am rückwärtigen Abschnitt des Kolbenstangenrohres 5 innerhalb des vom Druckmitteldruck beaufschlagbaren Raumes 3. An den Rollen 17 liegen von rückwärts die beiden Nocken 16 an, wie es aus Fig.3 zu ersehen ist; das Kolbenstangenrohr 5 ist somit beidseitig und symmetrisch über die Rollen 17 gegen die Nocken 16 abstützbar.

Jeder der Nocken 16 weist an seiner mit einer der Rollen 17 in Eingriff bringbaren Kontur 19, wie für Schnellanlegungen bekannt, eine flache Ausnehmung 20 auf, welche zumindest annähernd entsprechend dem Außendurchmesser der Rollen 17 gerundet ausgebildet ist; im Lösezustand des Bremszylinders einschließlich seiner Handbremsvorrichtung liegen die Rollen 17 in den Ausnehmungen 20 an den Konturen 19 der Nocken 16 an, wie es in Fig.3 dargestellt ist. Im Anschluß an die Ausnehmung 20 ist jeder Nocken 16 in seiner Kontur 19 als eine Kurvenbahn ausgebildet, deren jeder Punkt zumindest annähernd folgenden Formeln entspricht:

$$r = \text{Quadratwurzel aus der Summe von } h^2 + s^2$$

und

$$b = \text{arc tan} \frac{s}{h} + a$$

$$h = h_o + l + s * (a + a_s)$$

wobei bedeuten:

r    den Abstand eines Punktes der Kontur 19 des Nockens 16 von der Achse 11 der Welle 10;

b    (= Beta) den Winkel zwischen dem als Vektor darstellbaren Abstand r und einer Parallelen zur Achse 12 des Kolbenstangenrohres 5;

s    den Abstand der Achse 11 der Welle 10 zur Achse 12 des Kolbenstangenrohres 5 und

$h_o$    den Abstand des Grundes der Ausnehmung 20 des Nockens 16 an dessen Schnittstelle mit der Achse 12 des Kolbenstangenrohres 5 von einer zu dieser Achse 12 rechtwinkligen, die Achse 11 der Welle 10 beinhaltenden Ebene;

diese Bezeichnungen sind auch in Fig.3 eingetragen; des weiteren bedeuten:

l    die Größe des Schnellanlegehubes;
a    den Betätigungswinkel der Handbremse, d.h. der Welle 10 und
$a_s$    den erforderlichen Betätigungswinkel der Handbremse, d.h. der Welle 10, der zum Überwinden des Schnellanlegehubes erforderlich ist; dieser Betätigungswinkel ist eine Funktion der Größe des Schnellanlegehubes l.

Durch diese Ausbildung wird die Kontur 19 zu einer Evolventen, auf welcher die Rollen 17 beim Betätigen der Handbremse nach Überwinden des Schnellanlegehubes abrollen, wobei das Kolbenstangenrohr 5 keinerlei Querkräfte erfährt. Zudem ist eine hohe Kraftübersetzung, bezogen auf das auf die Welle 10 ausgeübte Drehmoment und die hieraus resultierende, auf das Kolbenstangenrohr 5 wirkende Verschiebekraft, erreichbar.

Die Kröpfung 14 der Welle 10 befindet sich im druckmittelbeaufschlagbaren Raum 3. Es ist daher zweckmäßig, die Welle 10 wie aus Fig.4 ersichtlich einerseits in einem ihrer Seitenschenkel 15 mit einer Lagerbohrung 21 zu versehen, in welche ein am Zylindergehäuse 1 nach außen druckmitteldicht gehalterter Bolzen 22 drehbar eingreift; es kann eine Wälzlagerung 23 zwischen der Lagerbohrung 21 und dem Bolzen 22 eingeordnet sein. Andererseits des Kolbenstangenrohres 5 durchbricht wie Welle 10 das Zylindergehäuse 1 in einer Bohrung 24 desselben, sie ist in dieser Bohrung 24 mittels einer Wälzlagerung 25 und eines Dichtringes 26 abgedichtet drehbar gelagert. An ihrem im Freien befindlichen Ende trägt die Welle 10 einen radial auskragenden Betätigungshebel 27.

Im Lösezustand befinden sich der Bremszylinder und dessen Teile in den aus der Zeichnung ersichtlichen Lagen, die Rollen 17 liegen dabei in den Ausnehmungen 20 an den Nocken 16 an.

Zum Betriebsbremsen ist der Raum 3 mit einem Bremsdruck zu beaufschlagen, wodurch der Kolben 2 unter Mitnahme des Kolbenstangenrohres 5 und über den gegebenenfalls arbeitenden Gestängesteller 8 auch des Betätigungsstößels 9 nach vorne bewegt werden. Die Rollen 17 werden dabei von den Nocken 16 abgehoben. Beim nachfolgenden Lösen kehren alle Teile mit Ausnahme einer evt. Verschleißnachstellung in ihre Ausgangslagen zurück.

Zum Handbremsen ist vermittels des Betätigungshebels 27 die Welle 10 derart zu drehen, daß die Rollen 17 aus den Ausnehmungen 20 austreten und auf der Kontur 21 abrollen. Beim Austreten der Rollen 17 aus den Ausnehmungen 20 werden während eines relativ kleinen Drehwinkels $a_s$ der Welle 10 das Kolbenstangenrohr 5 mitsamt dem Betätigungsstößel 9 um eine relativ große Wegstrecke, den Schnellanlegehub 1, nach vorne verschoben, wobei der Gestängesteller 8 gegebenenfalls zu arbeiten vermag. Während des nachfolgenden Drehens der Welle 10 rollen die Rollen 17 auf dem nach vorstehenden Formeln bestimmten Abschnitten der Konturen 19 ab, wobei unter Vermeiden von Seitenkräften das Kolbenstangenrohr 5 mit großer Kraft zum festen Zuspannen der Bremse nach vorne gedrückt wird, es wird hierbei ein der elastischen Veformung der Bremse entsprechender Hubweg mit großer, sich aus der Konturbestimmung ergebender Kraftübersetzung zurückgelegt. Dabei erfolgt die Umsetzung des auf die Welle 10 wirkenden Drehmomentes in die auf das Kolbenstangenrohr 5 wirkende Vorschubkraft mit hohem Wirkungsgrad, bei vorhandenen Wälzlagerungen 23 und 25 treten hierbei nur Rollreibungen auf.

Beim nachfolgenden Lösen der Handbremse erfolgen entsprechend umgekehrt verlaufende Vorgänge.

Kurzfassung:

Die Bremseinheit für Schienenfahrzeuge weist ein Kolbenstangenrohr 5 auf, das mittels eines integrierten Gestängestellers 8 mit einem Ausgangsstößel 9 gekoppelt ist. In den vom Bremsdruck beaufschlagbaren Raum 3 greift eine die Achse 12 des Kolbenstangenrohres 5 rechtwinklig kreuzende Welle 10 ein, die beiderseits des Kolbenstangenrohres 5 Nocken 16 trägt. Die Nocken 16 liegen an Rollen 17 an, welche am Kolbenstangenrohr 5 um eine zur Welle 10 parallele Drehachse 18 drehbar gelagert sind.

Die Kontur 19 der Nocken 16 ist als eine Evolvente ausgeformt, durch welche beim Drehen der Nocken 16 im Zusammenwirken mit der zum Kolbenstangenrohr 5 symmetrischen Anordnung keine Seitenkraftkomponenten auf das Kolbenstangenrohr 5 ausgeübt werden.

Aufstellung der Bezugszeichen:

| 1 | Zylindergehäuse | 2 | Kolben |
|---|---|---|---|
| 3 | Raum | 4 | Außendruckkammer |
| 5 | Kolbenstangenrohr | 6 | Ende |
| 7 | Rückstellfeder | 8 | Gestängesteller |
| 9 | Betätigungsstößel | 10 | Welle |
| 11 | Achse | 12 | Achse |
| 13 | Steg | 14 | Kröpfung |
| 15 | Seitenschenkel | 16 | Nocken |
| 17 | Rolle | 18 | Drehachse |
| 19 | Kontur | 20 | Ausnehmung |
| 21 | Lagerbohrung | 22 | Bolzen |
| 23 | Wälzlagerung | 24 | Bohrung |
| 25 | Wälzlagerung | 26 | Dichtring |
| 27 | Betätigungshebel | | |

**Patentansprüche**

1. Bremseinheit für Schienenfahrzeuge, mit einem Bremszylinder, bestehend aus einem vom einen Druckmittel beaufschlagbarem Kolben (2) mit beiderseits auskragendem Kolbenstangenrohr (5), in welchem ein den Kolben (2) mit einem Betätigungsstößel (9) koppelnder Gestängesteller (8) angeordnet ist, mit einer Handbremsvorrichtung, umfassend eine gegenüber Widerlagern wirkende, symmetrische Nockenbetätigung, wobei sich als Widerlager zu beiden Seiten des Kolbenstangenrohres (5) je eine Rolle (17) befindet und die Rollen (17) am Kolbenstangenrohr (5) um eine gemeinsame Drehachse (18) drehbar gelagert sind, welche die Achse (12) des Kolbenstangenrohres (5) rechtwinklig schneidet und sich als Nockenbetätigung auf einer zumindest annähernd parallel zur Drehachse (18) verlaufenden Welle (10) zwei gleichartig ausgebildete und das Kolbenstangenrohr (5) beidseitig übergreifende, zu Nocken (16) ausgebildete Seitenschenkel (16) befinden, deren je einer mit je einer der Rollen (17) in Eingriff steht, derart, daß sich die Nocken (16) in einem von dem Druckmittel beaufschlagbaren Raum (3) des Zylindergehäuses (1) der Bremsklotzeinheit befinden, und wobei die Welle (10) einerseits des Kolbenstangenrohres (5) in einem Seitenschenkel (15) eine Lagerbohrung (21) aufweist, in welche ein nach außen abgedichtet am Zylindergehäuse (1) gehaltener Bolzen (22) drehbar eingreift und andererseits des Kolbenstangenrohres (5) vermittels eines Dichtringes (26) druckmitteldicht in einer die Wandung des Zylindergehäuses (1) durchbrechenden Bohrung (24) gelagert ist und an ihrem ins Freie ragenden Ende einen radial auskragenden Betätigungshebel (27) trägt.

2. Bremseinheit nach Anspruch 1, dadurch gekennzeichnet, daß die Welle (10) in ihrem das Kolbenstagenrohr (5) überkreuzenden Bereich bügelartig gekröpft (Kröpfung 14) ausgebildet ist.

3. Bremseinheit nach Anspruch 2, dadurch gekennzeichnet, daß die Seitenschenkel (15) des gekröpften Bereiches (Kröpfung 14) der Welle (10) die Nocken (16) bilden.

4. Bremseinheit nach einem oder mehreren der vorstehenden Ansprüche, dadurch gekennzeichnet, daß die Nocken (16) je eine flache Ausnehmung (20) aufweisen, mit welcher sie im Lösezustand an den Rollen (17) anliegen, wobei die Ausnehmungen (20) zumindest annähernd entsprechend dem Außendurchmesser der Rollen (17) gerundet ausgebildet sind.

5. Bremseinheit nach Anspruch 4, dadurch gekennzeichnet, daß die Kontur (19) jedes Nockens (16) zumindest annähernd folgenden Formeln entspricht:

$$r = \text{Wurzel aus der Summe von } h^2 + s^2$$

und

$$b = \arctan \frac{s}{h} + a$$

mit

$$h = h_o + l + s * (a + a_s)$$

wobei bedeuten:

r    den Abstand eines Punktes der Kontur (19) des Nockens (16) von der Achse (11) der Welle (10),

b    den Winkel zwischen r als Vektor und einer Parallelen zur Achse (12) des Kolbenstangenrohres (5),

s    den Abstand der Achse (11) der Welle (10) zur Achse (12) des Kolbenstangenrohres (12)

$h_o$    den Abstand des Grundes der Ausnehmung (20) des Nockens (16) an dessen Schnittstelle mit der Achse (12) des Kolbenstangenrohres (5) von einer zu dieser Achse (12) rechtwinkligen, die Achse (11) der Welle (10) beinhaltenden Ebene,

l    die Größe des Schnellanlegehubes,

a    den Betätigungswinkel der Handbremse, d.h. der Welle (10),

$a_s$    den Betätigungswinkel zur Überwindung des Schnellanlegehubes, der eine Funktion der Größe des Schnellanlegehubes l ist.

**6.** Bremseinheit nach einem oder mehreren der Ansprüche 2 bis 5, dadurch gekennzeichnet, daß die Welle (10) den vom Kolben (2) nach rückwärts auskragenden Abschnitt des Kolbenstangenrohres (5) überkreuzt.

**7.** Bremseinheit nach Anspruch 6, dadurch gekennzeichnet, daß der Steg (13) des bügelartig gekröpften Bereiches (Kröpfung 14) der Welle (10) etwa halbzylindrisch ausgebildet ist, wobei er im Lösezustand der Handbremse im wesentlichen seitlich vom Kolbenstangenrohr (5) auskragt und beim Betätigen der Handbremse hinter das hintere Ende (6) des Kolbenstangenrohres (5) einschwenkt.

## Claims

**1.** Brake unit for rail vehicles, having a brake cylinder consisting of a piston (2), to which a pressure medium can be applied, having a piston rod tube (5), which protrudes on both sides and in which there is arranged a slack adjuster (8) which couples the piston (2) to an actuating plunger (9), having a hand-brake apparatus comprising a symmetrical cam actuating means which acts in opposition to abutments, wherein respective rollers (17) are located as abutments on both sides of the piston rod tube (5) and the rollers (17) are mounted on the piston rod tube (5) so as to be rotatable about a common axis of rotation (18) which intersects the axis (12) of the piston rod tube (5) at right angles, and positioned as the cam actuating means on a shaft (10) which extends at least substantially parallel to the axis of rotation (18) there are two side legs (15) which are formed in a similar manner and so as to form cams (16) overlapping the piston rod tube (5) on both sides thereof and each of which is engaged with a respective roller (17) in such a way that the cams (16) are located in a chamber (3) of the cylinder housing (1) of the brake block unit, to which chamber the pressure medium can be applied, and wherein the shaft (10) on one side of the piston rod tube (5) in one side leg (15) has a bearing bore (21) into which a pin (22) that is held on the cylinder housing (1) in an outwardly sealed manner engages in a rotatable manner and on the other side of the piston rod tube (5) is mounted so as to be sealed with respect to the pressure medium by means of a sealing ring (26) in a bore (24) breaking through the wall of the cylinder housing (1), and at its end that projects into the open air bears a radially protruding actuating lever (27).

**2.** Brake unit according to claim 1, characterised in that the region of the shaft (10) that crosses over the piston rod tube (5) is formed so as to be offset in a stirrup-like manner (offset 14).

**3.** Brake unit according to claim 2, characterised in that the side legs (15) of the offset region (offset 14) of the shaft (10) form the cams (16).

**4.** Brake unit according to one or more of the preceding claims, characterised in that the cams (16) each have a shallow recess (20) with which they rest against the rollers (17) in the released state, with the recesses (20) being formed in a rounded manner so as to correspond at least substantially to the outside diameter of the rollers (17).

**5.** Brake unit according to claim 4, characterised in that the contour (19) of each cam (16) complies at least substantially with the following formulae:

$$r = \text{root of the sum of } h^2 + s^2$$

and

$$b = \arctan \frac{s}{h} + a$$

with

$$h = h_0 + l + s * (a + a_s)$$

where:

r      stands for the distance of a point of the contour (19) of the cam (16) from the axis (11) of the shaft (10),
b      stands for the angle between r as a vector and a line parallel to the axis (12) of the piston rod tube (5),

s    stands for the distance of the axis (11) of the shaft (10) from the axis (12) of the piston rod tube (5),

$h_0$    stands for the distance of the base of the recess (20) of the cam (16) at the latter's point of intersection with the axis (12) of the piston rod tube (5) from a plane at right angles to this axis (12) and containing the axis (11) of the shaft (10),

l    stands for the magnitude of the rapid application stroke,

a    stands for the angle of actuation of the hand brake, that is, of the shaft (10),

$a_s$    stands for the angle of actuation for covering the rapid application stroke, which is a function of the magnitude of the rapid application stroke l.

6.  Brake unit according to one or more of claims 2 to 5, characterised in that the shaft (10) crosses over the section of the piston rod tube (5) which protrudes rearwards from the piston (2).

7.  Brake unit according to claim 6, characterised in that the cross-piece (13) of the region of the shaft (10) that is offset in a stirrup-like manner (offset 14) is formed so as to be roughly semi-cylindrical, in the released state of the hand brake protruding substantially to the side from the piston rod tube (5) and when the hand brake is actuated swinging in behind the rear end (6) of the piston rod tube (5).

**Revendications**

1.  Unité de frein pour véhicule sur rails comportant un cylindre de frein, constitué par un piston (2) pouvant être chargé par un fluide sous pression et pourvu d'une tige tubulaire de piston (5) qui fait saillie des deux côtés et dans laquelle est disposé un régleur de timonerie (8) qui accouple le piston (2) à un poussoir d'actionnement (9), et comportant un dispositif de freinage à main comprenant une unité symétrique d'actionnement à cames, agissant par rapport à des butées, et dans lequel des galets respectifs (17) sont disposés en tant que butées des deux côtés de la tige tubulaire de piston (5) et les galets (17) sont montés sur la tige tubulaire de piston (5) de manière à pouvoir tourner autour d'un axe de rotation commun (18), qui recoupe à angle droit l'axe (12) de la tige tubulaire de piston (5) et dans lequel il est prévu comme système d'actionnement à cames, sur un arbre (10) qui est au moins approximativement parallèle à l'axe de rotation (18), deux flasques latéraux (15) qui ont des agencements identiques et sont conçus sous la forme de cames (15), qui s'engagent des deux côtés par dessus la tige tubulaire de piston (5) et dont chacune engrène avec respectivement l'un des galets (17), de telle sorte que les cames (16) sont situées dans un espace (3), chargé par le fluide sous pression, du boîtier (1) du cylindre de l'unité de frein, et dans lequel l'arbre (10) possède d'un côté de la tige tubulaire de piston (5), dans un flasque latéral (15), un alésage de palier (21), dans lequel s'engage de manière à pouvoir tourner un axe (22) supporté, d'une manière étanche vis-à-vis de l'extérieur, par le boîtier (1) du cylindre, et est supporté de l'autre côté de la tige tubulaire du piston (5), d'une manière étanche au fluide sous pression, grâce à la présence d'une bague d'étanchéité (26), dans un alésage (24) qui traverse la paroi du boîtier (1) du cylindre, et porte sur son extrémité qui fait saillie extérieurement, un levier d'actionnement (27) qui fait saillie radialement.

2.  Unité de frein selon la revendication 1, caractérisée en ce que l'arbre (10) est coudée (partie coudée 14) en forme d'étrier dans sa partie qui croise la tige tubulaire de piston (15).

3.  Unité de frein selon la revendication 2, caractérisée en ce que les flasques latéraux (15) de la zone coudée (partie coudée 14) de l'arbre (10) forment les cames (16).

4.  Unité de frein selon une ou plusieurs des revendications précédentes, caractérisée en ce que les cames (16) possèdent chacune un évidement aplati (20), par lequel elles s'appliquent contre les galets (17), à l'état desserré, les évidements (20) étant agencés avec une forme arrondie d'une manière qui correspond approximativement au diamètre extérieur des galets (17).

5.  Unité de frein selon la revendication 4, caractérisée en ce que le profil (19) de chaque came (16) correspond au moins approximativement aux formules suivantes :

$$r = \text{racine carrée de la somme de } h^2 + s^2,$$

et

$$b = \text{arc tg}\ \frac{s}{h} + a$$

avec

$$h = h_0 + 2 + s * (a + a_s)$$

avec :

r     distance entre un point du profil (19) de la came (16) et l'axe (11) de l'arbre (10),

b     angle entre r en tant que vecteur et une parallèle à l'axe (12) de la tige tubulaire de piston (5),

s     distance entre l'axe (11) de l'arbre (10) et l'axe (12) de la tige tubulaire de piston (5),

$h_0$     distance entre le fond de l'évidement (20) de la came (16) au niveau de son point d'intersection avec l'axe (12) de la tige tubulaire de piston (5) et un plan qui est perpendiculaire à cet axe (12) et contient l'axe (II) de l'arbre (10),

l     longueur de la course de serrage rapide,

a     angle d'actionnement du frein à main, c'est-à-dire de l'arbre (10),

$a_s$     angle d'actionnement pour vaincre la course de serrage rapide, qui est fonction de la longueur de la course de serrage rapide l.

6. Unité de frein selon une ou plusieurs des revendications 2 à 5, caractérisée en ce que l'arbre (10) croise la partie de la tige tubulaire de piston (5), qui fait saillie vers l'arrière à partir du piston (2).

7. Unité de frein selon la revendication 6, caractérisée en ce que la barrette (13) de la partie coudée en forme d'étrier (partie coudée 14) de l'arbre (10) est agencée avec une forme approximativement semi-cylindrique, auquel cas elle fait saillie essentiellement latéralement à partir de la tige tubulaire de piston (5), lorsque le frein à main est à l'état desserré, et, lors de l'actionnement du frein à main, pivote derrière l'extrémité arrière (6) de la tige tubulaire de piston (5).

Fig.1

1

14

4
2

7

5

3

13

10

11

9   12   8

6

EP 0 674 116 B1

Fig. 2

# Fig.3

Fig. 4

EP 0 674 116 B1